# EUROPEAN PATENT APPLICATION

(11) **EP 4 749 760 A1**
(43) Date of publication of application: **27.05.2026**
(21) Application number: 24860324.3
(22) Date of filing: 23.08.2024
(51) Int. Cl.: H01M 10/48, H01M 10/42, H01M 50/271, H01M 10/04, H01M 50/211

(54) **BATTERY MODULE AND BATTERY PACK COMPRISING SAME**

(30) Priority: 25.08.2023 KR 20230112324
(71) Applicant: LG Energy Solution, Ltd., Seoul 07335 (KR)
(72) Inventor: AHN, Kwan Hyeuk, Daejeon 34122 (KR); HAN, Sung Min, Daejeon 34122 (KR); KIM, Seok Hee, Daejeon 34122 (KR); HER, Pill Jun, Daejeon 34122 (KR)
(74) Representative: Plasseraud IP
(86) International application number: PCT/KR2024/012571
(87) International publication number: WO 2025/048404

(57) **Abstract**

The present disclosure relates to a battery module and a battery pack. The battery module according to an embodiment of the present disclosure may include a plurality of battery cells, a printed circuit board (PCB) coupled to the plurality of battery cells, a temperature detection unit disposed on the PCB to detect a temperature of the plurality of battery cells, a top plate covering the PCB, and having an opening at an overlapping location with the temperature detection unit, and an opening cover covering the opening, wherein at least part of the opening cover is made of a transparent material to make the temperature detection unit visible from outside.

## Description

### TECHNICAL FIELD

### CROSS-REFERENCE TO RELATED APPLICATIONS

The present application claims priority to Korean Patent Application No. 10-2023-0112324 filed on August 25, 2023 in the Republic of Korea, the disclosure of which is incorporated herein by reference.

### TECHNICAL FIELD

The present disclosure relates to a battery module and a battery pack including the same.

### BACKGROUND ART

Recently, with increasing demand for portable electronic devices such as laptop computers, smartphones and tablets, many studies are being conducted on high performance secondary batteries that can be repeatedly recharged. In particular, with the issue of depletion of fossil fuels and growing concerns about environmental pollution, many studies are being conducted on hybrid electric vehicles and electric vehicles.

The most essential component of hybrid electric vehicles or electric vehicles is a battery pack that supplies power to a motor. The battery pack used in hybrid electric vehicles or electric vehicles include a battery module including a plurality of battery cells, and the plurality of battery cells are connected in series and/or in parallel to increase capacity and output of the battery module.

The battery cell generates heat by electrochemical reaction. When the heat generated from the battery cell is not properly released to the atmosphere, heat buildup may occur in the battery module, causing degradation, fire or explosion in the battery module. Accordingly, it is important to monitor and manage the heat generated from the battery cell. Accordingly, monitoring whether the heat generated from the battery cell is released to the atmosphere is done by measuring the temperature of the battery cell in real time. To this end, a temperature sensor is installed near the battery cell.

However, malfunction or damage occurs in the temperature sensor inside the battery module due to physical interference with other component, and an operator cannot identify whether the temperature sensor is positioned in an accurate fixed location.

Accordingly, there is a need for the battery module capable of preventing physical interference between the temperature sensor and other structure and allowing to see the location of the temperature sensor from the outside of the module.

### SUMMARY

### TECHNICAL PROBLEM

The present disclosure is designed to solve the above-described problem, and therefore an embodiment of the present disclosure is directed to providing a battery module capable of preventing interference between a temperature detection unit and a top plate.

An embodiment of the present disclosure is directed to providing a battery module capable of allowing a temperature detection unit to be seen from the outside without a module disassembly process.

### TECHNICAL SOLUTION

A battery module according to an embodiment of the present disclosure may include a plurality of battery cells, a printed circuit board (PCB) coupled to the plurality of battery cells, a temperature detection unit disposed on the PCB to detect a temperature of the plurality of battery cells, a top plate covering the PCB, and having an opening at an overlapping location with the temperature detection unit, and an opening cover configured to cover the opening, wherein at least part of the opening cover may be made of a transparent material to make the temperature detection unit visible from outside.

The PCB may include a PCB body, and a leg extended from the PCB body and elastically deformable with respect to the PCB body, and the temperature detection unit may be located at the leg.

The battery module according to an embodiment of the present disclosure may further include a pressure pad disposed in the leg and configured to press the leg in a direction toward the plurality of battery cells.

The pressure pad may be supported in contact with an inside surface of the top plate facing the PCB.

The pressure pad may have a 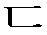 shape.

The pressure pad may be disposed around the temperature detection unit, but the pressure pad is spaced apart from the temperature detection unit.

The battery module according to an embodiment of the present disclosure may further include a step portion recessed with a predetermined width from a surface of the top plate and disposed at an area around the opening.

The opening cover may be coupled to the step portion.

The opening cover may be a tape having an insulating property.

The temperature detection unit may include a pair of temperature detection units spaced apart from each other along a length direction of the PCB.

The battery module according to an embodiment of the present disclosure may further include an adhesion unit stacked between the PCB and the top plate to stick the PCB and the top plate together, and disposed between the pair of temperature detection units.

The temperature detection unit may be a thermistor configured to detect the temperature by medium of a change in electrical resistance with temperature.

There may be provided a battery pack according to the present disclosure, and the battery pack according to the present disclosure may include a plurality of battery modules described above.

### ADVANTAGEOUS EFFECTS

The battery module according to an embodiment of the present disclosure may prevent interference between the temperature detection unit and the top plate.

The battery module according to an embodiment of the present disclosure may allow the temperature detection unit to be seen from the outside without a module disassembly process.

Besides, the effects of the present disclosure may include effects that can be easily predicted by those skilled in the art from the embodiments of the present disclosure.

### BRIEF DESCRIPTION OF THE DRAWINGS

FIG. 1 is a perspective view of a plurality of stacked battery cells of a battery module according to Embodiment 1 of the present disclosure.
FIG. 2 is a perspective view of a printed circuit board (PCB) coupled to a plurality of battery cells of a battery module according to Embodiment 1 of the present disclosure.
FIG. 3 is a perspective view of a top plate of a battery module covering a PCB coupled to the battery cells according to Embodiment 1 of the present disclosure.
FIG. 4 is an exploded perspective view of a battery module according to Embodiment 1 of the present disclosure.
FIG. 5 is a partial perspective view of a temperature detection unit and a pressure pad disposed on a PCB of a battery module according to Embodiment 1 of the present disclosure.
FIG. 6 is a plan view of a temperature detection unit and a pressure pad disposed on a PCB of a battery module according to Embodiment 1 of the present disclosure.
FIG. 7 is a partial perspective view of a step portion formed around an opening of a battery module according to Embodiment 2 of the present disclosure.
FIG. 8 is a plan view of a step portion formed around an opening of a battery module according to Embodiment 2 of the present disclosure.

### DETAILED DESCRIPTION

Hereinafter, exemplary embodiments of the present disclosure will be described in sufficient detail with reference to the accompanying drawings to enable persons having ordinary skill in the technical field pertaining to the invention to easily put it into practice. The following description is one of many aspects of the embodiments, and in describing an embodiment, a detailed description of well-known functions or elements is omitted for clarity in describing the subject matter of the present disclosure.

In affixing the reference numerals to the elements in each drawing, identical or similar reference numerals are affixed to identical or similar elements throughout the specification. An element including the common function with an element included in an embodiment is described using the same name in other embodiment. The terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

Additionally, the present disclosure is not limited to the above-described embodiments, and it is obvious to persons having ordinary skill in the technical field pertaining to the present disclosure that a variety of modifications and changes may be made thereto from this disclosure. Therefore, it should be understood that the scope of the present disclosure is not limited to the disclosed embodiments, and the appended claims and their equivalents or variations fall within the scope of the present disclosure.

### Embodiment 1

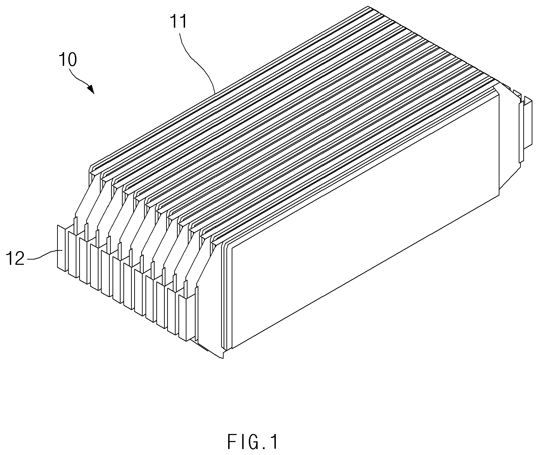

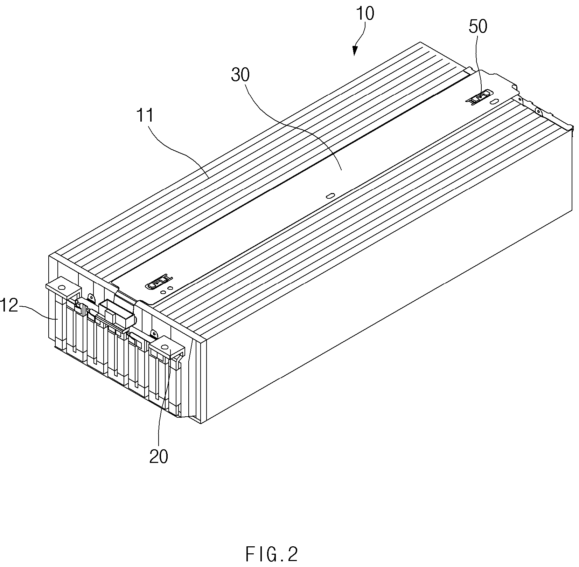

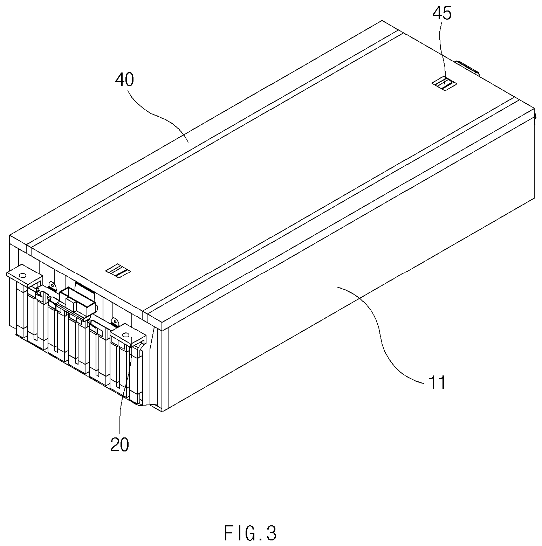

FIGS. 1 to 3 are perspective views showing a battery module in assembled state according to Embodiment 1 of the present disclosure. Specifically, FIG. 1 is a perspective view of a plurality of stacked battery cells 11 of the battery module according to Embodiment 1 of the present disclosure, FIG. 2 is a perspective view of a printed circuit board (PCB) 30 coupled to the plurality of battery cells 11 of the battery module according to Embodiment 1 of the present disclosure, and FIG. 3 is a perspective view of a top plate 40 of the battery module covering the PCB coupled to the battery cells 11 according to Embodiment 1 of the present disclosure.

Referring to FIGS. 1 to 3, the battery module according to Embodiment 1 of the present disclosure may include the plurality of battery cells 11, the PCB 30 and the top plate 40.

First, referring to FIG. 1, the battery cell 11 may have, for example, a rectangular plate shape having a length direction. The battery cell 11 may include a plurality of battery cells, and the plurality of battery cells 11 may be stacked along a preset stack direction. The plurality of stacked battery cells 11 may form a battery cell stack 10. The battery cell 11 may be, for example, a pouch-type battery cell, but the type and shape of the battery cell 11 is not limited thereto. Each battery cell 11 may have a lead 12, and the lead 12 may be formed at two end portions of the battery cell 11 in the length direction. The lead 12 may include a positive electrode lead or a negative electrode lead, and the plurality of battery cells 11 may have the positive electrode leads and the negative electrode leads arranged in an alternating manner along the stack direction.

Referring to FIG. 2, the PCB 30 may be coupled to the plurality of stacked battery cells 11. The PCB 30 may be, for example, a Flexible Printed Circuit Board (FPCB), and be configured to acquire/control the electrical state of the plurality of battery cells 11. Many different types of circuit components such as a semiconductor, a resistor, a condenser or a wiring electrically connecting them may be mounted on the PCB 30.

The battery module according to Embodiment 1 of the present disclosure may further include a busbar frame 20. The busbar frame 20 may be configured to electrically connect the plurality of battery cells 11. The busbar frame 20 may be coupled to the two end portions of the plurality of stacked battery cells 11 in the length direction. The leads 12 of the plurality of battery cells 11 may be coupled to the busbar frame 20. For example, the lead 12 of the battery cell 11 may be connected to the busbar frame 20 by welding. The busbar frame 20 may be made of, for example, a conductive material. In this instance, the PCB 30 may be electrically connected to the busbar frame 20 coupled to the plurality of battery cells 11. In other words, the PCB 30 may be electrically/physically coupled to the busbar frame 20.

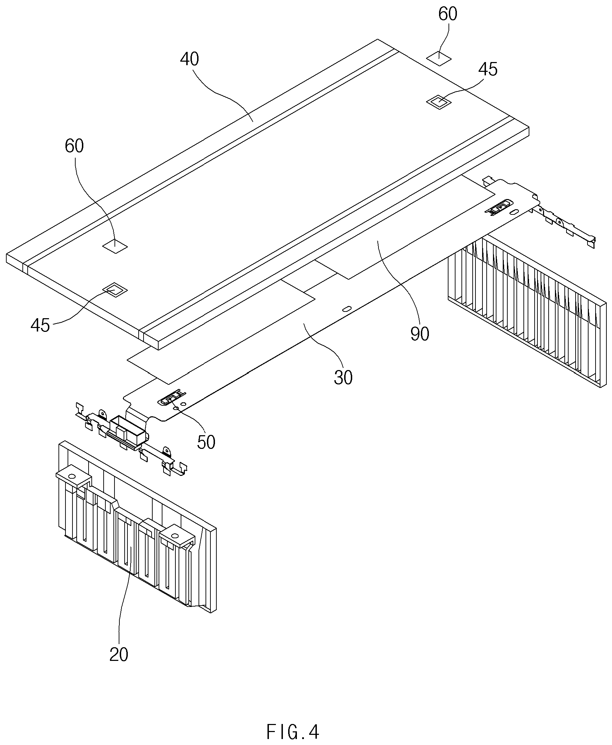

A temperature detection unit 50 may be present on the PCB 30. The temperature detection unit 50 may be disposed at a part of the PCB 30 to detect a temperature of the battery cells 11. The temperature detection unit 50 may be, for example, a temperature sensor. The temperature detection unit 50 may be, for example, a thermistor configured to detect the temperature by the medium of a change of electrical resistance with temperature. In this case, the temperature detection unit 50 may include oxides of a plurality of metals, for example, cobalt, copper, iron. The temperature detection unit 50 may include a plurality of temperature detection units. The shape and location of the temperature detection unit 50 will be described in detail with reference to FIGS. 4 to 6 below.

Referring to FIG. 3, the top plate 40 may be coupled to the plurality of stacked battery cells 11. The top plate 40 may be configured to cover the plurality of battery cells 11 and the PCB 30 coupled to the battery cells 11. The top plate 40 may cover the battery cells 11 and the PCB 30 to protect them from the outside and prevent impurity infiltration. The top plate 40 may be formed in the shape of a rectangular plate.

The top plate 40 may have an opening 45. In a state that the top plate 40 covers the PCB 30, the opening 45 may be formed at a corresponding location to the temperature detection unit 50 of the PCB 30. Accordingly, the opening 45 may include a plurality of openings corresponding to the plurality of temperature detection units 50 of the PCB 30. The opening 45 may run through the top plate 40 from one side to the other side, and by employing the opening 45, it may be possible to prevent physical interference between the temperature detection unit 50 disposed on the PCB 30 and the top plate 40. Furthermore, by employing the opening 45, it may be possible to check the physical state of the temperature detection unit from the outside. The positional relationship between the opening 45 and the temperature detection unit 50 will be described in detail with reference to FIG. 4 below.

FIG. 4 is an exploded perspective view of the battery module according to Embodiment 1 of the present disclosure. In FIG. 4, it should be noted that the shape of the battery cell stack is omitted to help the structural understanding of the battery module.

Referring to FIG. 4, the battery module according to Embodiment 1 of the present disclosure may include the busbar frame 20, the PCB 30 and the top plate 40.

As described above, the busbar frame 20 may be coupled to the two end portions of the battery cell stack in the length direction to electrically connect the plurality of battery cells, and the PCB 30 coupled to the battery cell stack may be physically/electrically connected to the busbar frame 20. The top plate 40 may be configured to cover the battery cell stack and the PCB 30 coupled to the battery cell stack.

The temperature detection unit 50 may be present on the PCB 30. The temperature detection unit 50 may include a plurality of temperature detection units on the PCB 30 to detect the temperature of the plurality of battery cells. The plurality of temperature detection units 50 may be spaced apart from each other along the length direction of the PCB 30. For example, the temperature detection unit 50 may include a pair of temperature detection units, and the pair of temperature detection units may be spaced apart from each other in symmetry along the length direction of the PCB 30. By employing this configuration, it may be possible to create more accurate temperature data by detecting the temperature of multiple parts of the stacked battery cells.

The top plate 40 that covers the PCB 30 may have the opening 45 at the corresponding location to the temperature detection unit 50 of the PCB 30. The opening 45 may be formed in the corresponding number and location to the temperature detection unit 50. Because the opening 45 runs through the portion of the top plate 40 corresponding to the temperature detection unit 50 of the PCB 30, physical interference of the temperature detection unit 50 with the top plate 40 may be prevented. Accordingly, it may be possible to significantly reduce damage or malfunction of the temperature detection unit 50 caused by physical interference with the top plate 40.

The battery module according to Embodiment 1 of the present disclosure may further include an opening cover 60. The opening cover 60 may be configured to cover the opening formed in the top plate 40, and may be formed from a transparent material so that the temperature detection unit 50 of the PCB 30 may be observed through the opening cover 60. The opening cover 60 may be, for example, formed of a transparent or translucent tape. The opening cover 60 may include a material having an insulating property for electrical stability. The opening cover 60 may be, for example, formed of a transparent insulating tape. The opening cover 60 may be formed in the corresponding number to the opening 45 formed in the top plate 40.

The battery module according to Embodiment 1 of the present disclosure may further include an adhesion unit 90. The adhesion unit 90 may be configured to stick the top plate 40 and the PCB 30 together. The adhesion unit 90 may be stacked between the top plate 40 and the PCB 30. The adhesion unit 90 may be, for example, extended along the length direction of the PCB 30, and may include a plurality of adhesion units. The adhesion unit 90 may be adhered to a portion of the PCB 30 at which the temperature detection unit 50 is not formed.

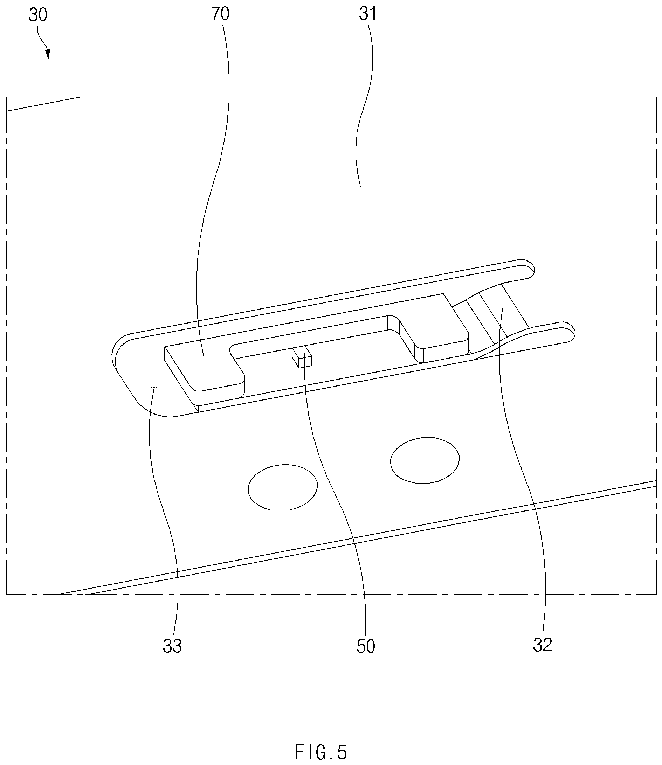

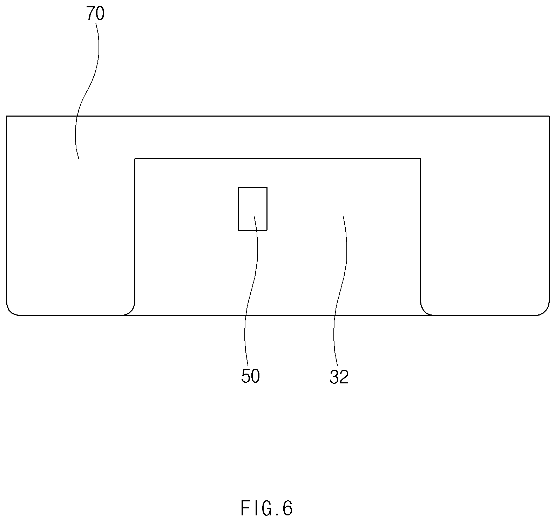

FIGS. 5 and 6 show the temperature detection unit 50 and a pressure pad 70 provided in the PCB 30. Specifically, FIG. 5 is a partial perspective view showing the temperature detection unit 50 and the pressure pad 70 disposed on the PCB 30, and FIG. 6 is a plan view of the temperature detection unit 50 and the pressure pad 70 disposed on the PCB 30.

Referring to FIGS. 5 and 6, the PCB 30 may include a PCB body 31 and a leg 32. The leg 32 may be extended from the PCB body 31, and be elastically deformable with respect to the PCB body 31. The leg 32 may be disposed in a leg hole 33 formed at a portion of the PCB body 31. Accordingly, for example, when a force directed toward the battery cell stack is applied to the leg 32, the connected part of the leg 32 and the PCB body 31 may elastically deform and the leg 32 may move a predetermined distance to the battery cell stack.

The temperature detection unit 50 may be disposed in the leg 32 of the PCB 30. The battery module according to Embodiment 1 of the present disclosure may further include the pressure pad 70. The pressure pad 70 may be disposed in the leg 32 of the PCB 30 together with the temperature detection unit 50, and be configured to press the leg 32 in the direction toward the battery cell stack. The pressure pad 70 may have a shape that surrounds the temperature detection unit 50. The pressure pad 70 may have, for example, a 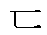 shape that surrounds the temperature detection unit 50 (see FIG. 6). When the top plate covers the PCB 30, the inside surface of the top plate facing the PCB may press the pressure pad 70 in the direction toward the battery cell stack, and accordingly the pressure pad 70 may press the leg 32 in the direction toward the battery cell stack again. In other words, the pressure pad 70 may be supported on the inside surface of the top plate and press the leg 32 in the direction toward the battery cell stack, and when pressed by the pressure pad 70, the leg 32 may elastically deform and be placed at the predetermined distance moved in the direction toward the battery cell stack. By employing this configuration, the gap between the temperature detection unit 50 disposed in the leg 32 and the battery cell stack may be reduced, and accordingly accuracy and reliability in battery cell temperature detection of the temperature detection unit 50 may be significantly improved.

In this instance, the pressure pad 70 may be disposed around the temperature detection unit 50, but spaced apart from the temperature detection unit 50 to prevent physical interference with the temperature detection unit 50. In other words, to reduce the risk of physical interference between the temperature detection unit 50 and the pressure pad 70, the distance between the pressure pad 70 and the temperature detection unit 50 may be equal to or larger than a preset value.

### Embodiment 2

The battery module according to Embodiment 2 of the present disclosure has a step portion 80 recessed with a predetermined width from surface of the top plate 40 and disposed at an area around the opening 45, as opposed to Embodiment 1. It should be noted that the above-described technical description of Embodiment 1 may be equally applied to Embodiment 2, and the common description to Embodiment 1 is omitted and Embodiment 2 will be described based on a difference from Embodiment 1.

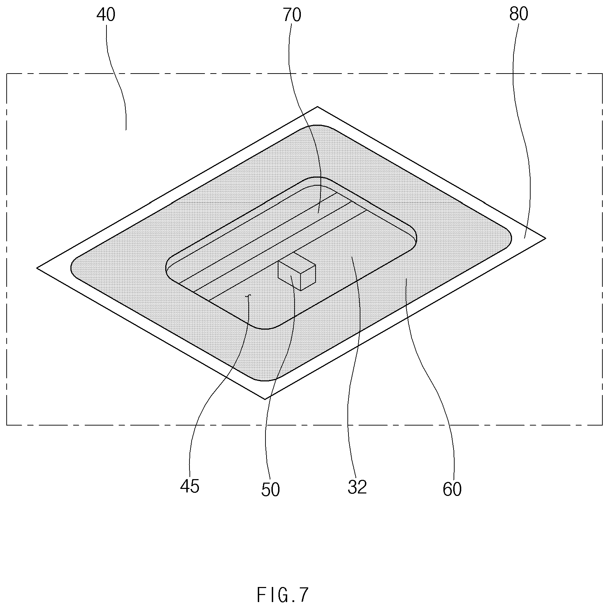

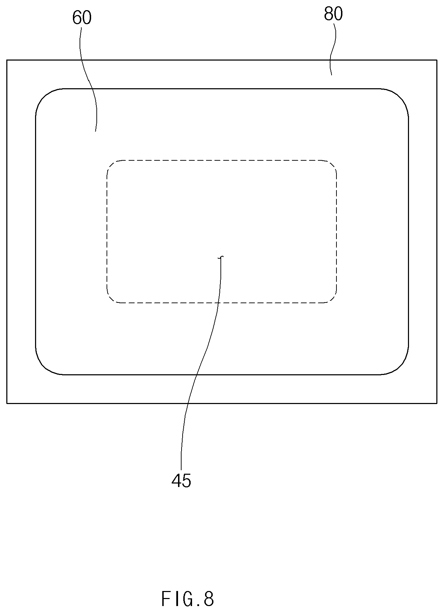

FIGS. 7 and 8 show the step portion 80 of the battery module according to Embodiment 2 of the present disclosure. Specifically, FIG. 7 is a partial perspective view of the step portion 80 formed around the opening 45 of the battery module according to Embodiment 2 of the present disclosure, and FIG. 8 is a plan view of the step portion 80 formed around the opening 45 of the battery module according to Embodiment 2.

Referring to FIGS. 7 and 8, the battery module according to Embodiment 2 of the present disclosure may include the step portion 80.

The step portion 80 may be recessed with the predetermined width from one surface of the top plate 40, and have a shape that surrounds the opening 45 formed in the top plate 40. For example, when the opening 45 has a rectangular hole as a whole, the step portion 80 may also have a rectangular shape that surrounds the opening 45.

The opening cover 60 may be situated on the step portion 80. The opening cover 60 may be a transparent/translucent insulating tape as described above in Embodiment 1, and when the opening cover 60 is situated on the step portion 80, the risk of separation of the opening cover 60 may be significantly reduced and aesthetic integrity may be improved. The opening cover 60 may have a larger area than the opening 45, and for the opening cover 60 to be properly situated on the step portion 80, the opening cover 60 may have a smaller area than the step portion 80. The physical state of the temperature detection unit 50 disposed in the leg 32 of the PCB and the pressure pad 70 disposed around the temperature detection unit 50 may be identified through the opening cover 60 situated on the step portion 80.

The present disclosure may provide a battery pack including a plurality of battery modules described above.

Although the present disclosure has been hereinabove described with a limited number of embodiments and drawings, the foregoing description is provided to describe the technical aspect of the present disclosure by way of example, and a variety of modifications and change may be made by those skilled in the art without departing from the essential features of the present disclosure.

Accordingly, the disclosed embodiments are provided to describe the technical aspect of the present disclosure but not intended to be limiting, and the technical scope of the present disclosure is not limited by these embodiments. The scope of protection of the present disclosure should be interpreted by the appended claims, and it should be interpreted that all the technical aspect in the equivalent scope is included in the scope of protection of the present disclosure.

### [List of Reference Numerals]

10: Battery cell stack
11: Battery cell
12: Lead
20: Busbar frame
30: PCB
31: PCB body
32: Leg
33: Leg hole
40: Top plate
45: Opening
50: Temperature detection unit
60: Opening cover
70: Pressure pad
80: Step portion
90: Adhesion unit

## Claims

1. A battery module comprising:
a plurality of battery cells;
a printed circuit board (PCB) coupled to the plurality of battery cells;
a temperature detection unit disposed on the PCB to detect a temperature of the plurality of battery cells;
a top plate covering the PCB, and having an opening at an overlapping location with the temperature detection unit; and
an opening cover covering the opening, wherein at least part of the opening cover is made of a transparent material to make the temperature detection unit visible from outside.

2. The battery module according to claim 1,
wherein the PCB includes:
a PCB body; and
a leg extended from the PCB body and elastically deformable with respect to the PCB body, and
wherein the temperature detection unit is located at the leg.

3. The battery module according to claim 2, further comprising:
a pressure pad disposed in the leg and configured to press the leg in a direction toward the plurality of battery cells.

4. The battery module according to claim 3,
wherein the pressure pad is supported in contact with an inside surface of the top plate facing the PCB.

5. The battery module according to claim 3,
wherein the pressure pad has a 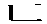 shape.

6. The battery module according to claim 3,
wherein the pressure pad is disposed around the temperature detection unit, but spaced apart from the temperature detection unit.

7. The battery module according to claim 1, further comprising:
a step portion recessed with a predetermined width from a surface of the top plate and disposed at an area around the opening.

8. The battery module according to claim 7,
wherein the opening cover is coupled to the step portion.

9. The battery module according to claim 1,
wherein the opening cover is a tape having an insulating property.

10. The battery module according to claim 1,
wherein the temperature detection unit includes a pair of temperature detection units spaced apart from each other along a length direction of the PCB.

11. The battery module according to claim 10, further comprising:
an adhesion unit stacked between the PCB and the top plate to stick the PCB and the top plate together, and disposed between the pair of temperature detection units.

12. The battery module according to claim 1,
wherein the temperature detection unit is a thermistor configured to detect the temperature by medium of a change in electrical resistance with temperature.

13. A battery pack comprising:
a plurality of battery modules according to claim 1.
